# EUROPEAN PATENT SPECIFICATION

(11) **EP 0 444 835 B1**
(45) Date of publication and mention of the grant of the patent: **25.10.1995**
(21) Application number: 91301455.1
(22) Date of filing: 22.02.1991
(51) Int. Cl.: B32B 27/06, B32B 15/08, B65D 35/02

(54) **Collapsible laminated tube for dentifrice**
Zusammenfaltbare Laminattube für Zahnpasta
Tube pliable laminé pour dentifrice

(30) Priority: 26.02.1990 US 484711
(43) Date of publication of application: 04.09.1991
(73) Proprietor: Colgate-Palmolive Company, New York, N.Y. 10022-7499 (US)
(72) Inventor: Tavss, Edward A., Kendall Park, New Jersey (US); Santalucia, John, New Brunswick, New Jersey (US); Robinson, Richard S., Piscataway, New Jersey (US)
(74) Representative: Kearney, Kevin David Nicholas

(56) References cited:
- EP-A- 0 287 246
- EP-A- 0 370 820
- GB-A- 1 501 353
- GB-A- 1 566 422
- GB-A- 2 151 986
- WORLD PATENTS INDEX LATEST Accession No. 88-060981 Week 09 Derwent Publications Ltd., London GB &JP-A-63017048 (TEIJIN KK) 25-01-88
- WORLD PATENTS INDEX LATEST Accession No. 87-316317 Week 45 Derwent Publications Ltd., London GB &JP-A-62222844 (TORAY IND.INC.) 30-09-87

## Description

The present invention relates broadly to a container having a layer of a blend of polyethylene and polybutylene terephthalate. The invention is more particularly concerned with a collapsible dispensing container of laminated construction in the body portion thereof whereby product permeation and absorption, and oxygen absorption, are substantially prevented in all regions of the container structure.

Collapsible tubes formed of metallic and plastic materials have long been known in the packaging field. Extruded metal tubes are inherently brittle and repeated use not infrequently results in wall cracks so that product is exuded from a location other than the essential rigid dispensing orifice. Of the prior art metal tubes, aluminium tubes, while probably being the least brittle, are somewhat limited in their applications since up to the present time it has not been possible to apply to the interior surfaces thereof a completely satisfactory coating. A coating is required to prevent attack and corrosion of the metal by alkaline or acid contents and contamination of the contents by the reaction products. Notwithstanding the relatively brittle nature of a metal tube, the mentioned internal coating operation requires an additional processing step which necessarily increases the cost of the final article.

Tubes formed of polyethylene and other plastic materials have enjoyed wide commercial success in the packaging of many products. However, certain products after a time have been noted to deteriorate when contained in polyethylene. Plastics as exemplified by polyethylene are permeable to a degree when employed in the wall thicknesses used in tubular containers. This results in the essential oils embodied in most dentifrices for flavouring purposes being reduced in volume during storage of the container, rendering the dentifrice less palatable.

It has been proposed to provide a relatively thin metallic foil barrier between the product and the polyethylene tube body to prevent the mentioned loss of essential oils and the absorption of oxygen. The metallic barrier has been suggested as an interlayer between facing sheets of polyethylene, and the laminate be formed by heat with or without suitable adhesives. However, while a structure of this general character is effective to prevent some product permeation and oxygen absorption through the tube body, and particularly when the inner thermoplastic layer is a copolymer of an olefin and a polar group containing monomer with which it is co-polymerisable, there remains the possibility of product deterioration, albeit to a lesser extent.

U.S. Patent 4,243,712 discloses the use of plastic tubes made from polyethylene terephthalate. It is also stated to be a flavour barrier. However, the main use for the tubes is as a shrink film. There is no disclosure to use of this film with pastes. Further, there is no disclosure of the use of this film to make tubes to hold and dispense dentifrices.

U.S. Patent 4,327,726 also discloses a tube comprised of polyethylene terephthalate. This is similar to a related disclosure in U.S. Patent 4,009,734. In each instance, the polyethylene terephthalate tube is used as a conduit means. It is not used to contain a dentifrice. Further, there is no disclosure in these patents to use a blend of polybutylene terephthalate and polyethylene.

U.S. Patent 3,295,725 discloses a laminated collapsible dispensing container. This container has a metallic barrier and a polyethylene inner wall. The laminates that are disclosed in this patent make acceptable dispensing tubes, however, their dispensing tubes suffer from a high absorption of flavourant oils.

U.S. Patent 4,595,612 discloses the structure of a toothpaste dispensing tube which has as the inner layer a layer of polyethylene terephthalate. This polyester produces a good tube laminate. However, there is not disclosed the use of polybutylene terephthalate nor the use of a polybutylene terephthalate blend as the inner layer for a toothpaste dispenser.

Canadian Patent 728,525 discloses the use of a metal layer coated with polyethylene for use in making dentifrice dispensing tubes. However, as has been pointed out polyethylene will absorb a large amount of the flavourant oils in a dentifrice composition.

A further disadvantage in a polyethylene surface resides in the inability of the surface to readily receive printing or decorative material. In addition, polyethylene has a memory effect, that is, it does not remain compressed when squeezed, a particular disadvantage for dentifrice tubes. To counter such lack of compressibility the metal layer must be relatively thick so that its compressibility is imposed on the plastic.

GB 2151986 lists polyethylene terephthalate and polyethylene as two possible components for the layers of a toothpaste tube but does not suggest use of a mixture of polybutylene terephthalate and polyethylene. It teaches that polyethylene absorbs very much more flavour than polyethylene terephthalate. GB-A-1566422 discloses containers made of a metal sheet coated with a layer containing at least 70% by wt. of a thermoplastic polyester and up to 30% of an auxiliary resin. It teaches that coating components are not extracted by the contents filled in the container

However, all of this can be overcome through the use of a blend of polybutylene terephthalate and polyethylene having a specific range of compositions. Such a blend has properties superior to those of polyethylene alone or polybutylene terephthalate alone. The blend exhibits a synergism with regard to a significant decrease in the degree of absorption of flavourants from liquids and pastes.

It is, therefore, an objective of the present invention to provide a collapsible dispensing container of laminated wall construction in the body portion which has a decreased degree of flavourant absorption.

According to the present invention a container adapted to dispense liquid or paste compositions therefrom the container containing a liquid or paste composition comprising one or more essential oils, is characterised in that the innermost surfaces of the container which contact the said composition are composed of a blend of 80 to 99% by weight of polybutylene terephthalate and 1 to 20% of polyethylene.

The said polybutylene terephthalate preferably constitutes from about 94 to 98 percent by weight of the said polybutylene terephthalate-polyethylene blend.

Adjacent to the said innermost surfaces there is preferably a layer of a metal foil, for example aluminum foil. Adjacent to the said metal foil layer there is preferably a layer of paper. Adjacent to the said layer of paper there is preferably a layer of a tnermoplastic, which is preferably a blend of polybutylene terephthalate and polyethylene.

Between the said metal foil layer and the said polybutylene terephthalate layer or between the metal foil layer and the paper layer or both there is preferably a layer of adhesive.

The collapsible dispensing container of the present invention may be constructed from the laminated substrate by conventional and known apparatuses. Examples of such equipment and methods are shown in U.S. Patent No. 3,832,964, which is incorporated herein by reference.

The use of a blend of polybutylene terephthalate and polyethylene has a synergistic effect with regard to the absorption of flavourant oils from liquids and pastes. That is, the absorption of flavourant oils is less when the blend of polybutylene terephthalate and polyethylene is used than when either polybutylene terephthalate or polyethylene is used alone.

The invention may be put into practice in various ways and one specific embodiment of the invention will be described to illustrate the invention with reference to the accompanying drawings in which:
Figure 1 is a cross-sectional view of fragmentary portion of the present laminated substrate, and
Figure 2 is a side elevational view of a collapsible dispensing container embodying the novel composition of the present invention, with portions of the body walls being broken away to more fully illustrate the laminated structure.

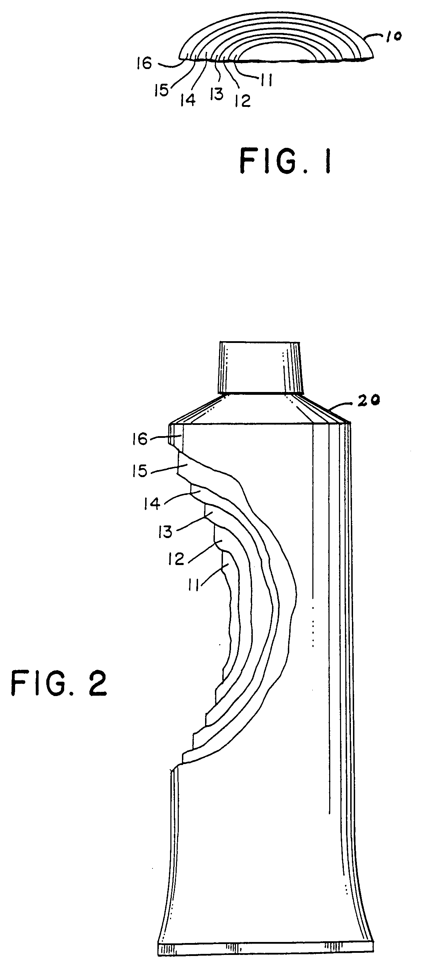

Referring now first to Figure 1 of the drawings, a substrate 10 is shown in cross-section to reveal the components of the laminate that go to make up the laminated configuration.

The layer 11 is a layer of a blend of polybutylene terephthalate and polyethylene. This layer will contact the contained liquid or paste. In most instances, it will be a paste such as a toothpaste. The next layer 12 is an adhesive layer. This adhesive layer bonds the polybutylene terephthalate and polyethylene blend layer with a metal foil layer 13, such as aluminium foil. The layer 14 is another adhesive layer that secures the other side of the metal foil layer to a paper layer 15. The topmost layer 16 can be of a wide range of materials, but it is preferred that it be constructed of the same material as layer 11. That is, it will be a layer of a blend of polybutylene terephthalate and polyethylene containing 80 to 99 percent by weight of polybutylene terephthalate and 1 to 20 percent by weight of polyethylene, and preferably about 94 to 98 percent by weight of polybutylene terephthalate and 2 to 6 percent by weight of polyethylene.

Essentially any adhesive may be used. Preferred adhesives may be a copolymer of ethylene and acrylic acid or methacrylic acid, or sodium or zinc salts thereof in a diluent system.

The metal foil is preferably an aluminium foil.

The paper layer is desirably a kraft paper.

The thickness range of each of the layers is preferably as follows:

The polybutylene terephthalate-polyethylene blend layer 11 is 0.5 mils to 3.0 mils, (0.013 to 0.075 mms) preferably 1.0 mils (0.025 mms).

The adhesive layer 12 is of sufficient thickness to assure adherence.

The metal foil layer 13 is 0.5 mils to 2.0 mils (0.013 to 0.051 mms), preferably 1.0 mils (0.025 mms).

The adhesive layer 14 is of sufficient thickness to assure adherence.

The paper layer 15 is 1.5 mils to 2.5 mils (0.038 to 0.064 mms), preferably 2.0 mils (0.051 mms) thick.

The polybutylene terephthalate-polyethylene layer 16 adheres to the paper layer 15 by means of the application of sufficient heat and pressure to the substrate. In the event the application of heat and pressure is not appropriate, a suitable adhesive may be employed.

Figure 2 is an example of the laminated structure of a collapsible container with the layers being demonstrated as in Figure 1 with the layer 11 being innermost and the other layers being of the same materials and in the same order as shown.

It is believed to be clear from the foregoing, that there is provided a collapsible container structure which substantially reduces the problems heretofore unsolved by the prior art. The laminated substrate and laminated shoulder piece 20 completely eliminate product permeation and oxygen absorption, and this highly desirable result is achieved by the use of low cost materials which preferably are combined into laminated form in the manner indicated in Figure 2.

The outer layer of polybutylene terephthalate-polyethylene blend is a thermoplastic capable of fusion during a side seaming step and of giving adequate protection to the paper and metallic foil interlayer. The art of seaming of a collapsible dentifrice tube of the general type that is disclosed is illustrated in U.S. Pat. No. 3,295,725, incorporated herein by reference.

However, the outer layer of polybutylene terephthalate-polyethylene blend may be eliminated if the foil barrier is of sufficient thickness to resist damage, and by allowing a thermoplastic material into the overlap side seam during the sealing when such a system is employed.

Further, the outer layer may be paper in a three-ply laminate form of paper, foil and thermoplastic. However, the outermost and innermost layers are preferably the same. The folded edges of the tube produced from the substrate are conveniently heat bonded. A suitable adhesive can be used when heat bonding is not possible. This modification is in addition to the aforementioned four-ply laminates. It is contemplated that suitable adhesives will be employed between the laminae whenever necessary. Like structures can be employed for the shoulder piece, cap, neck, rod, piston and in the construction of dispensing valves for such containers, particularly in conjunction with the interior portions exposed to the contained dentifrice, and, again, where required, compatible adhesives would be employed.

Various modifications of the invention have been disclosed herein, and these and other changes can be made without departing from the novel concepts of the present invention. Additionally, when cast as a film on the interior surfaces of fibre drums used for the storage of flavoured dentifrice, the material will retard flavour loss into the drums, thereby extending storage life.

The blend of polybutylene terephthalate and polyethylene contains 80 to 99 percent by weight polybutylene terephthalate and 1 to 20 percent by weight polyethylene, and preferably about 94 to 98 percent by weight polybutylene terephthalate and 2 to 6 percent by weight of polyethylene. The blend is formed by heating a mixture of polybutylene terephthalate and polyethylene to form a melt and forming a blend. This blend is then extruded to form the film for the particular layers.

The following tables show the synergistic effect of a blend of polybutylene terephthalate and polyethylene versus the use of polybutylene terephthalate alone or polyethylene alone. That is, it would be expected that the blend combination would have properties between those of the two components. However, the blend combination is superior to either of the blend components used alone. The evaluations in these tables were conducted by encapsulating a sample of a dentifrice paste and a flavour oil in an enclosure of each polymer and of the polymer blends and after three weeks at 90°F (32°C) determining the amount of flavourant absorbed by the particular film. In each instance, the film is the same thickness.

**Table I**

| Absorption Of Flavour From A Dentifrice Paste | |
|---|---|
| | Absorption (%) |
| PBT | 0.80 ± 0.02 |
| PBT + 3% low density polyethylene | 0.70 ± 0.02 |
| PBT + 3% medium density polyethylene | 0.67 ± 0.03 |
| PBT + 3% high density polyethylene | 0.66 ± 0.02 |
| Low density polyethylene | 2.80 ± 0.07 |
| PBT is polybutylene terephthalate | |

**Table II**

| Absorption of Neat Flavour Oil | |
|---|---|
| | Absorption (%) |
| PBT | 0.60 ± 0.03 |
| PBT + 3% low density polyethylene | 0.44 ± 0.02 |
| PBT + 3% medium density polyethylene | 0.38 ± 0.02 |
| PBT + 3% high density polyethylene | 0.30 ± 0.03 |
| Low density polyethylene | 4.53 ± 1.05 |

In these tables, it is clear that the blend of polybutylene terephthalate and polyethylene has a synergistic effect over the use of polybutylene terephthalate or polyethylene alone. This is the case whether the blend contains low density, medium density or high density polyethylene. Such synergism is unexpected. It would be expected that the values for the blend would fall between those of the components. However, this did not occur. The blend is superior to either of the components.

## Claims

1. A container adapted to dispense liquid or paste compositions therefrom the container containing a liquid or paste composition comprising one or more essential oils characterized in that the innermost surfaces of the container which contact the said composition are composed of a blend of 80 to 99% by weight of polybutylene terephthalate and 1 to 20% of polyethylene.

2. A paste dispensing container as claimed in Claim 1 characterized in that the said polybutylene terephthalate constitutes from about 94 to 98 percent by weight of the said polybutylene terephthalate-polyethylene blend.

3. A container as claimed in Claim 1 or Claim 2 characterized in that adjacent to the said innermost surfaces is a layer of a metal foil.

4. A paste dispensing container as claimed in Claim 3 characterized in that the said metal foil is aluminum foil.

5. A container as claimed in Claim 3 or Claim 4 characterized in that adjacent to the said metal foil layer is a layer of paper.

6. A container as claimed in Claim 5 characterized in that adjacent to the said layer of paper is a layer of a thermoplastic.

7. A container as claimed in Claim 6 characterised in that said thermoplastic is a blend of polybutylene terephthalate and polyethylene.

8. A container as claimed in any one of Claims 1 to 7 characterized in that between the said metal foil layer and the said innermost polybutylene terephthalate layer or between the metal foil layer and the paper layer or both there is a layer of adhesive.

## Patentansprüche

1. Zur Abgabe von flüssigen oder Pastenzusammensetzungen vorgesehener Behälter, der eine flüssige oder Pastenzusammensetzung enthält, die ein oder mehrere etherische Öle umfaßt, und der dadurch gekennzeichnet ist, daß die innersten Oberflächen des Behälters, die sich mit der Zusammensetzung in Kontakt befinden, aus einer Mischung aus 80 bis 99 Gew.% Polybutylenterephthalat und 1 bis 20 % Polyethylen zusammengesetzt sind.

2. Pastenspendebehälter nach Anspruch 1, dadurch gekennzeichnet, daß das Polybutylenterephthalat etwa 94 bis 98 Gew.% der Polybutylenterephthalat-Polyethylen-Mischung ausmacht.

3. Behälter nach Anspruch 1 oder Anspruch 2, dadurch gekennzeichnet, daß sich neben den innersten Oberflächen eine Schicht aus einer Metallfolie befindet.

4. Pastenspendebehälter nach Anspruch 3, dadurch gekennzeichnet, daß die Metallfolie Aluminiumfolie ist.

5. Behälter nach Anspruch 3 oder Anspruch 4, dadurch gekennzeichnet, daß sich neben der Metallfolienschicht eine Papierschicht befindet.

6. Behälter nach Anspruch 5, dadurch gekennzeichnet, daß sich neben der Papierschicht eine Schicht aus einem Thermoplasten befindet.

7. Behälter nach Anspruch 6, dadurch gekennzeichnet, daß der Thermoplast eine Mischung aus Polybutylenterephthalat und Polyethylen ist.

8. Behälter nach einem der Ansprüche 1 bis 7, dadurch gekennzeichnet, daß sich zwischen der Metallfolienschicht und der innersten Polybutylenterephthalatschicht oder zwischen der Metallfolienschicht und der Papierschicht oder beiden eine Klebstoffschicht befindet.

## Revendications

1. Récipient adapté pour délivrer des compositions liquides ou pâteuses, le récipient contenant une composition liquide ou pâteuse comprenant une ou plusieurs huiles essentielles, caractérisé en ce que les surfaces placées le plus à l'intérieur du récipient et qui sont en contact avec la composition comprennent un mélange de 80 à 99 % en poids de téréphtalate de polybutylène et 1 à 20 % de polyéthyléne.

2. Récipient délivrant une pâte selon la revendication 1, caractérisé en ce que le téréphtalate de polybutylène représente de 94 à 98 % en poids du mélange polyéthyléne-téréphtalate de polybutylène.

3. Récipient selon la revendication 1 ou 2, caractérisé en ce qu'une couche réalisée en feuille de métal est voisine des surfaces situées le plus à l'intérieur.

4. Récipient délivrant une pâte selon la revendication 3, caractérisé en ce que la feuille de métal est une feuille d'aluminium.

5. Récipient selon la revendication 3 ou 4, caractérisé en ce qu'une couche de papier est placée au voisinage de la couche constituée d'une feuille de métal.

6. Récipient selon la revendication 5, caractérisé en ce qu'une couche de matière thermoplastique est placée au voisinage de la couche de papier.

7. Récipient selon la revendication 6, caractérisé en ce que la matière thermoplastique est un mélange de téréphtalate de polybutylène et de polythylène.

8. Récipient selon l'une quelconque des revendications 1 à 7, caractérisé en ce qu'une couche de matière adhésive est placée entre la couche de feuille de métal et la couche la plus à l'intérieur de téréphtalate de polybuthylène ou est placée entre la couche de feuille de métal et la couche de papier ou les deux à la fois.
